# EUROPÄISCHE PATENTSCHRIFT

(11) **EP 3 707 053 B1**
(45) Veröffentlichungstag und Bekanntmachung des Hinweises auf die Patenterteilung: **23.03.2022**
(21) Anmeldenummer: 18803352.6
(22) Anmeldetag: 06.11.2018
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 09.11.2017 DE 102017219914
(43) Veröffentlichungstag der Anmeldung: 16.09.2020
(73) Patentinhaber: thyssenkrupp Presta AG, 9492 Eschen (LI); thyssenkrupp AG, 45143 Essen (DE)
(72) Erfinder: SECKER, Joachim, 7000 Chur (CH); PASCH, Frank, 76534 Baden-Baden (DE)
(74) Vertreter: thyssenkrupp Intellectual Property GmbH
(86) Internationale Anmeldenummer: PCT/EP2018/080258
(87) Internationale Veröffentlichungsnummer: WO 2019/091951

(56) Entgegenhaltungen:
- EP-A1- 0 802 104
- WO-A1-2016/186144
- US-A1- 2013 213 174

## Beschreibung

### Stand der Technik

Die Erfindung betrifft eine Lenksäule für ein Kraftfahrzeug, umfassend eine Stelleinheit, die eine in einer Manteleinheit um ihre Längsachse drehbar gelagerte Lenkspindel aufweist, eine mit der Karosserie des Kraftfahrzeugs verbindbare Trageinheit, die sich in Höhenrichtung erstreckende erste und zweite Seitenwangen mit sich einander quer zur Längsachse gegenüberliegenden ersten und zweiten Innenseiten aufweist, zwischen denen die Manteleinheit angeordnet ist, und eine auf die Seitenwangen wirkende Spanneinrichtung, die in einer Fixierstellung die erste Innenseite gegen eine erste Außenseite der Manteleinheit und die zweite Innenseite gegen eine zweite Außenseite der Manteleinheit verspannt, und in einer Freigabestellung die Innenseiten von den Außenseiten löst und eine Verstellung der Stelleinheit relativ zur Trageinheit freigibt, wobei zumindest auf der ersten Außenseite erste und zweite erhabene Auflageflächen ausgebildet sind, welche die erste Innenseite kontaktieren und einen Abstand voneinander haben, wobei die zweite Außenseite eine dritte erhabene Auflagefläche aufweist, welche die zweite Innenseite kontaktiert, und die zumindest teilweise in dem Abstand zwischen der ersten Auflagefläche und der zweiten Auflagefläche angeordnet ist.

Zur Anpassung der Lenkradposition an die Sitzposition des Fahrers eines Kraftfahrzeugs sind derartige Lenksäulen im Stand der Technik bekannt, bei denen das bezogen auf die Fahrtrichtung am hinteren Ende der Lenkspindel angebrachte Lenkrad in Höhenrichtung, quer zur Lenksäulen-Längsachse im Fahrzeuginnenraum positioniert werden kann.

Die Höhenverstellbarkeit wird dadurch realisiert, dass die Stelleinheit, welche die Lenkspindel lagert, in einem bezogen auf die Fahrtrichtung vorderen, von der Fahrerposition abgewandten Bereich der Manteleinheit ein Schwenklager aufweist, und darin um eine in Querrichtung horizontal liegende Schwenkachse an der Karosserie des Fahrzeugs verschwenkbar gelagert ist. Durch Verschwenken kann der hintere Bereich der Stelleinheit in Höhenrichtung bewegt und verstellt werden.

Zur Fixierung einer eingestellten Höhenposition ist eine lösbare Spanneinrichtung vorgesehen, die auch als Feststell-, Fixier- oder Klemmeinrichtung bezeichnet wird, und die wahlweise in eine Fixierstellung oder eine Freigabestellung gebracht werden kann. In der gelösten oder Freigabestellung kann die Manteleinheit relativ zur Karosserie verschwenkt werden, in der Fixierstellung ist die Manteleinheit in der eingestellten Verstellposition relativ zur Karosserie an einer karosseriefest angebrachten Trageinheit festgelegt, auch als Konsole oder Halteeinheit bezeichnet. In der gattungsgemäßen Bauform weist die Trageinheit zwei gabelartig nach unten vorstehende Seitenwangen auf, zwischen deren Innenseiten die Manteleinheit angeordnet ist.

Zur Fixierung wird die Spanneinrichtung betätigt, wodurch über ein Spanngetriebe eine Spannkraft ausgeübt wird, welche die Seitenwangen gegeneinander zusammendrückt, so dass deren Innenseiten gegen die Außenseiten der Manteleinheit reibschlüssig angepresst werden. Dadurch wird die Stelleinheit kraftschlüssig zwischen den Seitenwangen eingespannt und in der eingestellten Verstellposition an der Trageinheit festgelegt. Das Spanngetriebe kann beispielsweise eine Nockenscheiben-, Keilscheiben-, Gewinde- oder Kippstiftanordnung aufweisen, welche eine manuell über einen Bedienhebel oder motorisch bewirkte Drehung einer die beiden Seitenwangen quer durchsetzenden Spannachse in die Spannkraft umgesetzt, mit der die Seitenwangen in Achsrichtung der Spannachse gegeneinander zusammengezogen werden.

Zum Verstellen der Lenksäule wird die Spanneinrichtung gelöst, d.h. in Freigabestellung gebracht, wobei die Spannkraft aufgehoben und der Kraftschluss gelöst wird, so dass die Manteleinheit der Stelleinheit zwischen den Seitenwangen der Trageinheit zumindest in Höhenrichtung auf und ab bewegt werden kann.

Zur sicheren Fixierung der Lenkradposition unter den im Fahrbetrieb zu erwartenden mechanischen Beanspruchungen ist eine definierte kraftschlüssige Verbindung zwischen den Innenseiten der Trageinheit und den diese reibschlüssig kontaktierenden Außenseiten der Manteleinheit erforderlich. Um dies zu erreichen, ist es beispielsweise aus der US 2008/0252056 A1 bekannt, auf jeder der Außenseiten der Manteleinheit jeweils zumindest zwei räumlich getrennte, erhabene Auflageflächen auszubilden, welche sich außen an Auflagevorsprüngen befinden, die von der Außenseite vorstehen. Beim Spannen der Spanneinrichtung kommen nur diese Auflageflächen in Reibschluss mit den korrespondierenden Flächenbereichen der Innenseiten der Seitenwangen. Dadurch, dass die Größe der Auflageflächen und die von der Spanneinrichtung aufgebrachte Spannkraft vorgegeben wird, kann eine definierte Flächenpressung zwischen den Auflageflächen und den Innenseiten der Seitenwangen erzeugt werden, welche die zur sicheren kraftschlüssigen Fixierung erforderliche Reibkraft bewirkt.

Im Stand der Technik sind die besagten erhabenen Auflageflächen jeweils auf beiden Außenseiten gleichartig ausgebildet, und zu einer von Längsachse und Höhenrichtung aufgespannten Spiegelebene symmetrisch angeordnet. Dadurch, dass sowohl auf der ersten als auch auf der gegenüberliegenden zweiten Außenseite jeweils zwei Auflageflächen mit Abstand zueinander angeordnet sind, wird zwar die Spannkraft auf die Auflageflächen konzentriert, bezüglich der Einspannung der Manteleinheit zwischen der ersten und zweiten Innenfläche wird jedoch ein mechanisch überbestimmtes System gebildet. Dadurch können einzelne Auflageflächen in der Fixierstellung von der Spannkraft unterschiedlich belastet werden, wodurch unerwünschte Abweichungen der kraftschlüssigen Verbindung auftreten können und die Fixierwirkung beeinträchtigt werden kann, und es zu einer nachteiligen Verringerung der Eigenfrequenz und Steifigkeit der Lenksäule kommt.

Aus der gattungsgemäßen WO 2016/186144 A1 oder der EP 0 802 104 A1 ist es bekannt, erste und zweite Auflageflächen auf beiden Außenseiten vorzusehen, zwischen denen die Manteleinheit zwar festspannbar ist, wobei jedoch die Fixierung durch die symmetrische Anordnung erschwert sein kann, und eine hinreichend hohe Eigenfrequenz und Steifigkeit einen hohen Aufwand erfordert.

Angesichts der vorangehend erläuterten Problematik ist es eine Aufgabe der vorliegenden Erfindung, die Fixierung der Stelleinheit bei einer eingangs genannten Lenksäule zu verbessern, dass eine sichere Fixierung und eine hohe Eigenfrequenz und Steifigkeit erreicht wird.

### Darstellung der Erfindung

Diese Aufgabe wird gelöst durch eine Lenksäule für ein Kraftfahrzeug mit den Merkmalen des Anspruchs 1 und des Anspruchs 11. Vorteilhafte Weiterbildungen ergeben sich aus den Unteransprüchen.

Zur Lösung der vorgenannten Problematik wird erfindungsgemäß für eine Lenksäule der eingangs genannten Art vorgeschlagen, dass die Anordnung der Auflageflächen auf der ersten Außenseite asymmetrisch zur Anordnung der Auflageflächen auf der zweiten Außenseite ausgebildet ist.

Bei der Erfindung ist die Anordnung der Auflageflächen auf der einen, der ersten Außenseite asymmetrisch zur anderen, der zweiten Außenseite ausgebildet, anders als die im Stand der Technik bekannten symmetrischen, spiegelbildlich identischen Anordnungen auf beiden Außenseiten.

Im Sinne der Erfindung ist die Anordnung der dritten Auflagefläche, welche zumindest teilweise in dem Abstand zwischen der ersten Auflagefläche und der zweiten Auflagefläche angeordnet ist, so zu verstehen, dass die dritte Auflagefläche, wenn diese auf die erste Außenseite projiziert ist, zumindest teilweise in dem Abstand zwischen der ersten Auflagefläche und der zweiten Auflagefläche angeordnet ist.

Die Auflageflächen sind dadurch erhaben ausgebildet, dass sie außenseitig an Auflagevorsprüngen angeordnet sind, die von der jeweiligen Außenseite der Manteleinheit nach außen - gegen die jeweils gegenüberliegende Innenseite der korrespondierenden Seitenwange gerichtet - vorstehen. Im Bereich des Abstands zwischen der ersten und zweiten Auflagefläche, die auf der ersten Außenseite ausgebildet sind, springt die Außenseite entsprechend zurück, und kommt nicht in Kontakt mit der Seitenwange.

Auf der zweiten Außenseite ist eine dritte Auflagefläche ausgebildet, ebenfalls auf einem Auflagevorsprung, welche die korrespondierende zweite Innenseite kontaktiert und die bezüglich der ersten und zweiten Auflagefläche auf Lücke angeordnet ist. Entsprechend erstreckt sich die dritte Auflagefläche im Bereich des Abstands zwischen der ersten und zweiten Auflagefläche.

Die Spannkraft wird über die erste, zweite und dritte Auflagefläche auf die Manteleinheit übertragen. Durch die asymmetrische, versetzte Anordnung der drei Auflageflächen wird eine Dreipunkt-Klemmung realisiert, welche ein mechanisch eindeutig bestimmtes System bildet. An der ersten und zweiten Auflagefläche liegt immer die identische Spannkraft wie an der dritten Auflagefläche an. Die eindeutige Verteilung der Spannkraft ermöglicht die Realisierung einer gleichmäßigen Flächenpressung, die beim Fixieren der Lenksäule zuverlässig reproduzierbar ist. Im Ergebnis wird die Manteleinheit in Fixierstellung weitgehend unabhängig von Bauteil- und Fertigungstoleranzen fest zwischen den Seitenwangen eingespannt, und entsprechend die Stelleinheit reibschlüssig mit der Trageinheit verbunden, wodurch die Eigenfrequenz und Steifigkeit der Lenksäule in vorteilhafter Weise erhöht wird.

Die erfindungsgemäße asymmetrische Anordnung von drei Auflageflächen ist robust und zuverlässig, und kann verglichen mit dem Stand der Technik mit den bekannten und bewährten Fertigungs- und Montageverfahren praktisch ohne zusätzlichen Fertigungsaufwand realisiert werden.

Bevorzugt haben die erste Auflagefläche und die zweite Auflagefläche den Abstand in Höhenrichtung. Die dritte Auflagefläche ist an der gegenüberliegenden zweiten Außenseite erfindungsgemäß auf Höhe des Abstands positioniert. In einer Querschnittsansicht sind die drei Auflageflächen über den Umfang der Manteleinheit in den Eckbereichen eines Dreiecks verteilt angeordnet. Dadurch wird die Stelleinheit ähnlich wie in einem Dreibackenfutter kraftschlüssig in der Trageinheit eingespannt. Durch das mechanische eindeutig bestimmte Dreipunkt-Klemmsystem erfolgt eine sichere und reproduzierbare Fixierung, wodurch die Eigenfrequenz und Steifigkeit der Lenksäule erhöht wird.

Die Auflageflächen können die sich in Längsrichtung der Längsachse erstrecken, und beispielsweise auf leistenartigen Auflagevorsprüngen ausgebildet sein. Die Länge der Auflageflächen bzw. -vorsprünge kann bevorzugt derart vorgegeben werden, dass in jeder Verstellposition der zur Erzeugung der erfindungsgemäßen Dreipunkt-Klemmung erforderliche Kontakt der drei Auflageflächen mit den Innenseiten der Seitenwangen gewährleistet ist. Insbesondere können die Auflageflächen so lang sein wie oder länger als die Abmessung der Innenflächen in Längsrichtung. Die Längsrichtung entspricht der Richtung der Längsachse.

Alternativ können anstelle von durchgehend langgestreckten Auflageflächen auch abschnittweise unterbrochene, in Teil-Auflageflächen geteilte Auflageflächen vorgesehen sein. Die Teil-Auflageflächen können beispielsweise an längs in einer Reihe angeordneten, podestartig vorstehenden Teil-Auflagevorsprüngen angeordnet sein.

Es kann vorgesehen sein, dass die dritte Auflagefläche im Wesentlichen mittig in dem Abstand zwischen der ersten Auflagefläche und der zweiten Auflagefläche angeordnet ist. Unter im Wesentlichen mittig ist zu verstehen, dass der Flächenschwerpunkt der dritten Auflagefläche im Abstand zwischen der ersten Auflagefläche und der zweiten Auflagefläche angeordnet ist. Erstreckt sich der Abstand in Höhenrichtung, sind die erste und zweite Auflagefläche auf der ersten Außenseite in den Eckbereichen der Basis eines gleichschenkligen Dreiecks angeordnet, und die dritte Auflagefläche auf der zweiten Außenseite im Bereich der Spitze dieses Dreiecks. Dadurch kann ausgeübte Spannkraft optimiert auf die erste und zweite Auflagefläche verteilt werden, so dass die Flächenpressung in vorteilhafter Weise vergleichmäßigt wird.

Es ist möglich, dass die dritte Auflagefläche sich vollständig in dem Abstand zwischen der ersten Auflagefläche und der zweiten Auflagefläche erstreckt. Bevorzugt ist somit die dritte Auflagefläche, wenn diese auf die erste Außenseite projiziert wird, vollständig in dem Abstand angeordnet. Dadurch, dass die dritte Auflagefläche eine Abmessung in Richtung des Abstands hat, beispielsweise in Höhenrichtung, die kleiner oder gleich dem Abstand ist, erfolgt die Einleitung der Spannkraft in drei definierten, getrennten Flächenbereichen, wodurch die geschilderten Vorteile des mechanisch bestimmten Systems der erfindungsgemäßen Dreipunkt-Klemmung optimal umgesetzt werden können.

Die dritte Auflagefläche kann größer ausgebildet sein als die erste oder die zweite Auflagefläche, wobei bevorzugt die Summe der ersten und zweiten Auflagefläche im Wesentlichen der dritten Auflagefläche entspricht. Unter der Summe der ersten und zweiten Auflagefläche ist die Summe der Flächeninhalte der ersten und zweiten Auflagefläche zu verstehen. Die Spannkraft wird über die im Kraftfluss parallel angeordneten ersten und zweiten Aufnahmeflächen, sowie die dazu im Kraftfluss in Serie angeordnete dritte Auflagefläche auf die Manteleinheit übertragen. Die wirksame Flächenpressung ergibt sich folglich für die erste und zweite Auflagefläche aus dem Verhältnis der Spannkraft zur die Summe dieser beiden Flächen, und für die dritte Auflagefläche aus dem Verhältnis der Spannkraft zu deren Fläche. Dadurch, dass die dritte Auflagefläche größer gewählt wird als jeweils eine der ersten oder zweiten Auflageflächen, kann die Flächenpressung an diese beiden Flächen angepasst werden. Es kann vorteilhaft sein, dass die wirksame Flächenpressung für alle drei Auflageflächen im Wesentlichen gleich groß ist, womit gemeint ist, dass eine Abweichung von 20% bzgl. der größten wirksamen Flächenpressung zugelassen werden kann. Dadurch ergibt sich eine vergleichbare Festigkeit der kraftschlüssigen Verbindung auf beiden Außenseiten der Manteleinheit.

Alternativ ist es möglich, dass die dritte Auflagefläche kleiner ist als die erste oder zweite Auflagefläche, um eine höhere Flächenpressung zu realisieren. Mit anderen Worten ist der Flächeninhalt der dritten Auflagefläche kleiner als der Flächeninhalt der ersten Auflagefläche ist oder der Flächeninhalt der dritten Auflagefläche kleiner als der Flächeninhalt der zweiten Auflagefläche ist.

Die erste und zweite Auflagefläche können flächenmäßig im Wesentlichen gleich groß ausgebildet sein, oder auch unterschiedlich, um die Spannkraft definiert aufzuteilen.

Die Summe der Flächeninhalte der ersten und zweiten Auflagefläche weist einen Wert auf, der bevorzugt zwischen 30% und 70% des Wertes des Flächeninhalts der ersten Außenseite liegt.

Der Wert des Flächeninhalts der dritten Auflagefläche beträgt bevorzugt zwischen 10% und 30% des Wertes des Flächeninhalts der zweiten Außenseite liegt.

Bevorzugt kann die erste und die zweite Auflagefläche durch jeweils einen Vorsprung gebildet sein. Besonders bevorzugt ist der Vorsprung gegenüber der ersten Außenseite um mindestens 0,5mm erhaben.

Bevorzugt kann die dritte Auflagefläche durch einen Vorsprung gebildet sein. Besonders bevorzugt ist der Vorsprung gegenüber der ersten Außenseite um mindestens 0,5mm erhaben.

Es kann vorteilhaft sein, dass zumindest eine der Auflageflächen auf Höhe der Längsachse angeordnet ist. Die Längsachse liegt dann mit anderen Worten in einer Horizontalebene, deren Normalenrichtung mit der Höhenrichtung übereinstimmt und die eine der Auflageflächen schneidet. Dies ist vorteilhaft zur Abstützung und Halterung der Stelleinheit bezüglich der Positionierung der Längsachse.

Die drei Auflageflächen befinden sich vorzugsweise, wie vorangehend beschrieben, über den Umfang der Manteleinheit verteilt in den Eckbereichen eines Dreiecks. Dadurch, dass die Längsachse bezüglich der Höhenrichtung innerhalb einer der Auflageflächen verläuft, die Horizontalebene also diese Auflagefläche schneidet, liegt sie unmittelbar innerhalb des Kraftflusses der Verspannung, nämlich innerhalb des besagten Dreiecks, oder zumindest eng benachbart dazu, wodurch sich eine besonders feste Fixierung der Stelleinheit bezüglich der Positionierung der Längsachse realisiert wird. Bevorzugt wird das Dreieck nicht von der Längsachse geschnitten.

Zumindest eine der Auflageflächen kann in zumindest zwei voneinander beabstandete Teilauflageflächen unterteilt sein. Die Teil-Auflageflächen sind quer zum Abstand beabstandet, beispielsweise in Längsrichtung, wenn erste und zweite Auflagefläche Abstand in Höhenrichtung haben. Die Unterteilung in Teil-Auflageflächen kann fertigungstechnisch vorteilhaft sein, beispielsweise zur Vermeidung von Materialanhäufungen bei gusstechnischer Fertigung. Außerdem ist es möglich, die Spanneinrichtung in der Höhe der betreffenden Auflagefläche zwischen den Teil-Auflageflächen anzuordnen.

Es kann vorgesehen sein, dass die Spanneinrichtung eine Spannachse aufweist, die die Seitenwangen und die Außenseiten durchsetzt. Eine derartige Spanneinrichtung, weist wie eingangs beschrieben ein Spanngetriebe auf, welches die Spannkraft über die in einer horizontalen Spannebene quer zur Längsachse liegende Spannachse auf die beiden Seitenwangen aufbringt und diese gegeneinander zusammenbewegt. Die Spannachse kann in der Nähe der Längsachse angeordnet sein, um auf den Kraftschluss wirkende Hebelkräfte bei einer Höhenbelastung der Stelleinheit gering zu halten. Dabei ist es vorteilhaft, dass die Spannachse eine der Auflageflächen, beispielsweise die erste oder zweite Auflagefläche durchsetzt. Dadurch, dass eine Durchgangsöffnung für den Spannbolzen im Bereich einer Auflagefläche angeordnet ist, wird die Spannkraft in vorteilhafter Weise direkt in Kraftrichtung in diese Auflagefläche eingeleitet. Bei einer Belastung der Stelleinheit kann keine Hebelwirkung zwischen Spannachse und Auflagefläche auftreten, und durch die direkte Krafteinleitung wird die Steifigkeit der kraftschlüssigen Verbindung und damit der Lenksäule in vorteilhafter Weise erhöht.

Die Manteleinheit kann als Gussteil ausgebildet sein, beispielsweise aus einem Metallguss wie Aluminium-, Magnesium oder Zinkdruckguss. An dieses Gussteil können einstückig von den Außenseiten nach außen vorstehende Anlagevorsprünge angeformt sein, welche die erste, zweite und dritte Auflagefläche aufweisen. Ein derartiges Gussteil ist rationell und maßgenau produzierbar, wobei eine Optimierung der erhabenen Auflageflächen zur Reduzierung von Materialanhäufungen dahingehend erfolgen kann, dass größere durchgehend ebene Außenflächen unterbrochen werden zur Bildung von Teil-Auflageflächen. Alternativ kann die Manteleinheit als Blechformteil ausgebildet sein, bevorzugt aus Stahlblech, welches bevorzugt durch Pressen, Stanzen und Biegen kalt umgeformt wird. In diesem Blechformteil können die erfindungsgemäßen erhabenen Auflageflächen außen auf sickenartig ausgeformten Anlagevorsprüngen realisiert werden. Derartige Blechformteile können ebenfalls günstig gefertigt werden.

Die Erfindung betrifft weiterhin eine Lenksäule für ein Kraftfahrzeug, umfassend eine Stelleinheit, die eine in einer Manteleinheit um ihre Längsachse drehbar gelagerte Lenkspindel aufweist, eine mit der Karosserie des Kraftfahrzeugs verbindbare Trageinheit, die sich in Höhenrichtung erstreckende erste und zweite Seitenwangen aufweist, zwischen denen die Manteleinheit angeordnet ist, und eine auf die Seitenwangen wirkende Spanneinrichtung, die in einer Fixierstellung die Sei-tenwangen die Manteleinheit verspannt, und in einer Freigabestellung die Seitenwangen von der Manteleinheit löst und eine Verstellung der Stelleinheit relativ zur Trageinheit freigibt.

Erfindungsgemäß stehen in einem Querschnitt, der orthogonal zur Längsachse ausgerichtet ist, die Manteleinheit und die Seitenwangen in genau drei Flächenabschnitten in Kontakt.

Die drei Flächenabschnitte sind so verteilt, dass die eine der Seitenwangen mit der Manteleinheit in zwei Flächenabschnitten in Kontakt steht und die andere der Seitenwangen mit der Manteleinheit in einem Flächenabschnitt in Kontakt steht. Somit stehen die Manteleinheit und die Seitenwangen der Trageinheit in genau drei Flächenabschnitten, die über den Umfang verteilt und zueinander beabstandet sind, in Kontakt.

Bevorzugt ist in der Manteleinheit ein inneres Mantelrohr aufgenommen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer schematischen perspektivischen Ansicht von hinten links gesehen,
- Figur 2: die Lenksäule gemäß Figur 1 mit einer zweiten Außenseite in einer ersten Ausführung in teilweise auseinander gezogenem Zustand (linke = zweite Außenseite),
- Figur 3: die Lenksäule gemäß Figur 2 ersten Außenseite in einer ersten Ausführung in einer Ansicht von hinten rechts, (rechte = erste Außenseite)
- Figur 4: ein Querschnitt C-C durch die Lenksäule gemäß der vorangehenden Figuren,
- Figur 5: eine Lenksäule mit einer zweiten Außenseite in einer zweiten Ausführung in einer Ansicht wie in Figur 2,
- Figur 6: eine Lenksäule mit einer zweiten Außenseite in einer dritten Ausführung in einer Ansicht wie in Figur 2,
- Figur 7: eine Lenksäule mit einer ersten Außenseite in einer zweiten Ausführung in einer Ansicht wie in Figur 3,
- Figur 8: eine Lenksäule mit einer ersten Außenseite in einer dritten Ausführung in einer Ansicht wie in Figur 3.

### Ausführungsformen der Erfindung

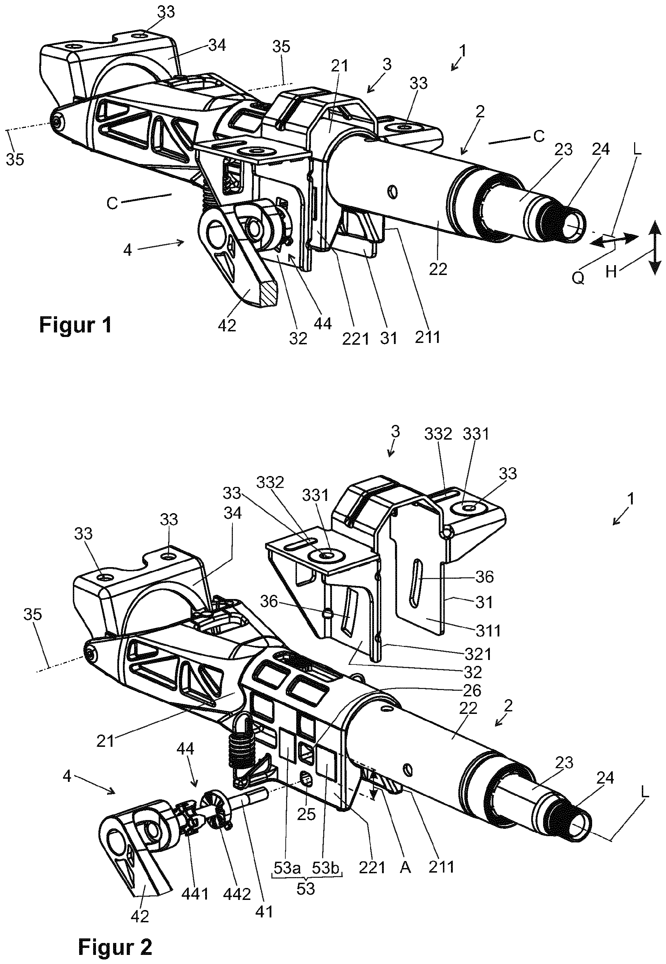

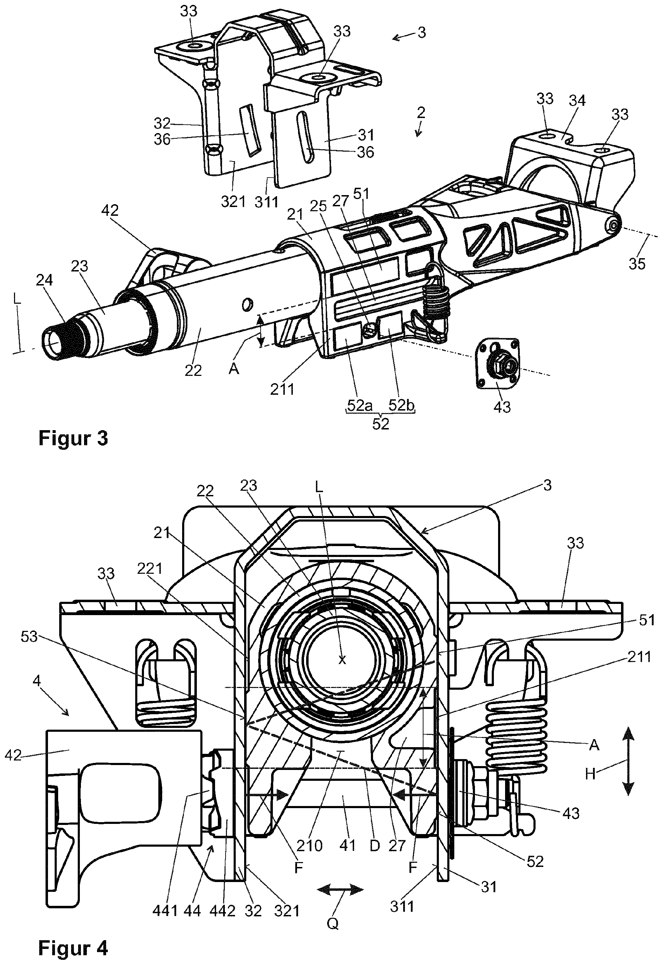

In den verschiedenen Figuren sind gleiche Teile stets mit den gleichen Bezugszeichen versehen und werden daher in der Regel auch jeweils nur einmal benannt bzw. erwähnt Figur 1 zeigt eine Lenksäule 1 als Ganzes in bezogen auf die Fahrtrichtung einer Ansicht von hinten auf die linke Seite. In Figur 2 ist die Lenksäule 1 in derselben Perspektive teilweise auseinander gezogen dargestellt; Figur 3 zeigt eine Ansicht von hinten auf die rechte Seite.

Die Lenksäule 1 umfasst eine Stelleinheit 2 mit einer Manteleinheit 21, welche ein inneres Mantelrohr 22 hält, in dem eine Lenkspindel 23 um die Längsachse L drehbar gelagert ist. Am hinteren Ende der Lenkspindel 23 befindet sich ein Befestigungsabschnitt 24 zur Anbringung eines hier nicht dargestellten Lenkrads.

Die Manteleinheit 21 weist eine erste, rechte Außenseite 211 und eine zweite, linke Außenseite 221 auf, die sich seitlich nach außen gerichtet in einer Horizontal- oder Querrichtung Q, quer zur Längsachse L und zur Höhenrichtung H, gegenüberliegen.

Eine Trageinheit 3 weist zwei Seitenwangen 31, 32 auf, nämlich eine erste oder rechte Seitenwange 31, und eine zweite oder linke Seitenwange 32, die sich in Höhenrichtung H in einer bügelartigen Anordnung nach unten erstrecken. Die Seitenwangen 31, 32 weisen sich in Querrichtung Q, horizontal gegenüberliegende erste und zweite Innenseiten 311 und 321 auf, wie in Figuren 2 und 3 erkennbar ist. Zur Befestigung an einer Karosserie eines Kraftfahrzeugs weist die Trageinheit 3 Befestigungsmittel 33 auf, beispielsweise Befestigungsöffnungen. Um das Befestigungsmittel 33 herum ist eine Ringauflage 331 ausgebildet, welche das Befestigungsmittel 33 vollständig einschließt. Weiterhin ist eine stegartige Erhabung 332 in der Trageinheit 3 vorgesehen, die sich in Querrichtung erstreckt. Die stegartige Erhebung 332 ist vom Befestigungsmittel 33 und der Ringauflage 331 beabstandet, wobei sowohl die Ringauflage 331 und auch die stegartige Erhebung 332 mit der Karosserie des Kraftfahrzeugs in Kontakt bringbar ist, so dass das Schwingverhalten der Lenksäule 1 dadurch verbessert ist.

Weiterhin ist die Manteleinheit 21 an ihrem vorderen Endbereich an einer Konsole 34 der Trageinheit 3 um eine Schwenkachse 35 verschwenkbar gelagert. Zur Höhenverstellung kann die Stelleinheit 2 in Höhenrichtung H durch Verschwenken nach oben und unten bewegt werden, wie mit dem Doppelpfeil angedeutet.

Im zusammengesetzten Betriebszustand gemäß Figur 1 ist die Manteleinheit 21 zwischen den Seitenwangen 31 und 32 angeordnet.

Eine Spanneinrichtung 4 umfasst eine Spannachse 41, an der ein Spannhebel 42 befestigt ist. Die Spannachse 41 erstreckt sich horizontal, d.h. in Querrichtung Q, durch Langlöcher 36 der Seitenwangen 31, 32 und eine die Manteleinheit 21 durch die Außenseiten 211 und 221 durchsetzende Öffnung 25. An dem freien Ende der Spannachse 41 ist ein Widerlager 43 befestigt, welches sich von außen auf der ersten Seitenwange 31 abstützt. Mit der Spannachse 41 wirkt ein Spanngetriebe 43 zusammen, welches als Hubgetriebe ausgebildet ist und sich außen auf der zweiten Seitenwange 32 abstützt, und beispielsweise zwei gegeneinander verdrehbare Nockenscheiben 441 und 442 aufweist. Zum Fixieren der Lenksäule 1 wird die Spannachse 41 durch manuelle Betätigung des Spannhebels 42 um ihre Achse gedreht, wobei das Spanngetriebe 44 bewirkt, dass die Spannachse 41 in ihrer Achsrichtung aus der zweiten Seitenwange 32 heraus nach außen gezogen wird. Dadurch werden die Seitenwangen 31 und 32 zwischen dem Spanngetriebe 44 und dem Widerlager 43 mit einer in Querrichtung Q wirkenden Spannkraft F gegeneinander zusammengedrückt, wie in der Querschnittdarstellung von Figur 4 erkennbar ist. Dabei wird die Manteleinheit 21 zwischen den Innenseite 311 und 321 eingespannt, wie weiter unten noch im Detail erläutert wird.

Alternativ zu den genannten Nockenscheiben 441, 442 kann das Spanngetriebe 44 andere Getriebeelemente zur Realisierung eines Hubgetriebes aufweisen, wie beispielsweise im Stand der Technik bekannte Rampen oder Aufnahmen für Wälzkörper oder Kippstifte.

Zwischen der rechten Außenseite 211 und der linken Außenseite 221 weist die Manteleinheit 21 einen sich in Längsrichtung erstreckenden Schlitz 210 auf. Der Schlitz 210 kann auch als Klemmschlitz bezeichnet werden. Somit bildet die Manteleinheit 21 eine Klemmschelle, in der das innere Mantelrohr 22 mittels der Spanneinrichtung 4 einspannbar ist, wobei die Breite des Schlitzes 210 in der Fixierstellung gegenüber der Breite des Schlitzes in der Freigabestellung verschmälert ist.

Auf der rechten Außenseite 211 sind, wie Figur 3 entnehmbar ist, eine erste Auflagefläche 51 und eine zweite Auflagefläche 52 ausgebildet, die zwei Teil-Auflageflächen 52a und 52b umfasst. Die Auflageflächen 51 und 52 sind bezüglich der ersten Außenseite 211 erhaben ausgebildet. Damit ist gemeint, dass sie auf nach außen aus der Außenseite 211 vorstehenden, langgestreckt-leistenartigen Auflagevorsprüngen ausgebildet sind, so dass die übrige Fläche der Außenseite 211 gegenüber den Auflageflächen 51 und 52 zurückspringt, d.h. in Querrichtung auf die Längsachse L zu. Die Auflageflächen 51 und 52 erstrecken sich in Längsrichtung, d.h. in Richtung der Längsachse L, wobei die zweite Auflagefläche 52 in Längsrichtung unterbrochen ist.

In Höhenrichtung haben die erste und zweite Auflageflächen 51 und 52 einen Abstand A voneinander.

Die der ersten Außenseite 211 an der Manteleinheit 21 gegenüberliegende zweite Außenseite 221, die in einer ersten Ausführung in Figur 2 gezeigt ist, weist eine ebenfalls erhabene dritte Auflagefläche 53 auf. In der gezeigten Ausführung umfasst die langgestreckte Auflagefläche 53 zwei in Längsrichtung in einer Reihe angeordnete Teil-Auflageflächen 53a und 53b.

Erfindungsgemäß ist die dritte Auflagefläche 53 bezüglich der Höhenrichtung H in dem Abstand A zwischen der ersten Auflagefläche 51 und der zweiten Auflagefläche 52 angeordnet. Dies wird durch den in Figur 2 eingezeichneten Abstand A verdeutlicht. Bevorzugt ist die Abmessung in Höhenrichtung der dritten Auflagefläche 53 kleiner oder gleich dem Abstand A, so dass die dritte Auflagefläche 53 sich vollständig in dem Abstand A zwischen der ersten Auflagefläche 51 und der zweiten Auflagefläche 52 erstreckt. Dabei kann die dritte Auflagefläche 53 im Wesentlichen wie dargestellt mittig in dem Abstand A zwischen der ersten Auflagefläche 51 und der zweiten Auflagefläche 52 angeordnet sein.

Wird die Spanneinrichtung 4 durch Verdrehen der Spannachse 41 mittels des Spannhebels 42 in Fixierposition gebracht, werden die Seitenwangen 31 und 32 von außen mit der Spannkraft F gegen die Manteleinheit 21 kraftschlüssig verspannt. Dabei wirkt die Spannkraft F zur Erzeugung reib- bzw. kraftschlüssiger Verbindungen zwischen den ersten und zweiten Auflageflächen 51 und 52 und der korrespondierenden ersten Innenseite 311 der ersten Seitenwange 31, und zwischen der dazu im Kraftfluss in Serie liegenden dritten Auflagefläche 53 und der Innenseite 321 der zweiten Seitenwange 32.

Die Anordnung der drei Auflageflächen 51, 52 und 53 an der Manteleinheit 21 geht aus dem in Figur 4 gezeigten Querschnitt hervor, der eine axiale Schnittansicht von hinten gesehen zeigt. Darin ist erkennbar, dass die erste Innenseite 311 der ersten (rechten) Seitenwange 31 die Manteleinheit 21 auf der ersten Außenseite 211 nur an den ersten und zweiten Auflageflächen 51 und 52 kontaktiert, und die dass die zweite Innenseite 321 der zweiten (linken) Seitenwange 32 die Manteleinheit 21 auf der zweiten Außenseite 221 nur an der dritten Auflagefläche 53 kontaktiert. Die dritte Auflagefläche 53 innerhalb des Abstands A derart auf Lücke bezüglich der ersten und zweiten Auflageflächen 51 und 52 angeordnet, dass die dritte Auflagefläche 53 sich im Bereich der Spitze eines - vorzugsweise gleichschenkligen - Dreiecks (D) liegt, welches schematisch gestrichelt eingezeichnet ist, und die ersten und zweiten Auflageflächen 51 und 52 in den Eckbereichen der Basis des Dreiecks (D) liegen. Dadurch wird eine Dreipunkt-Klemmung der Manteleinheit 21 zwischen den Seitenwangen 31 und 32 realisiert. In der gezeigten gleichschenkligen Anordnung kann die Spannkraft F gleichmäßig verteilt in die ersten und zweiten Auflageflächen 51 und 52 eingeleitet werden.

In der in Figur 2 gezeigten Ausführung der dritten Auflagefläche 53 ist diese in zwei in Längsrichtung beabstandete Teil-Auflageflächen 53a und 53b aufgeteilt, zwischen denen eine Einformung 26 in die zweite Außenseite 221 eingebracht ist. Durch diese Einformung 26 wird bei einer Fertigung der Manteleinheit 21 als Gussteil die Bildung von nachteiligen Materialanhäufungen verhindert.

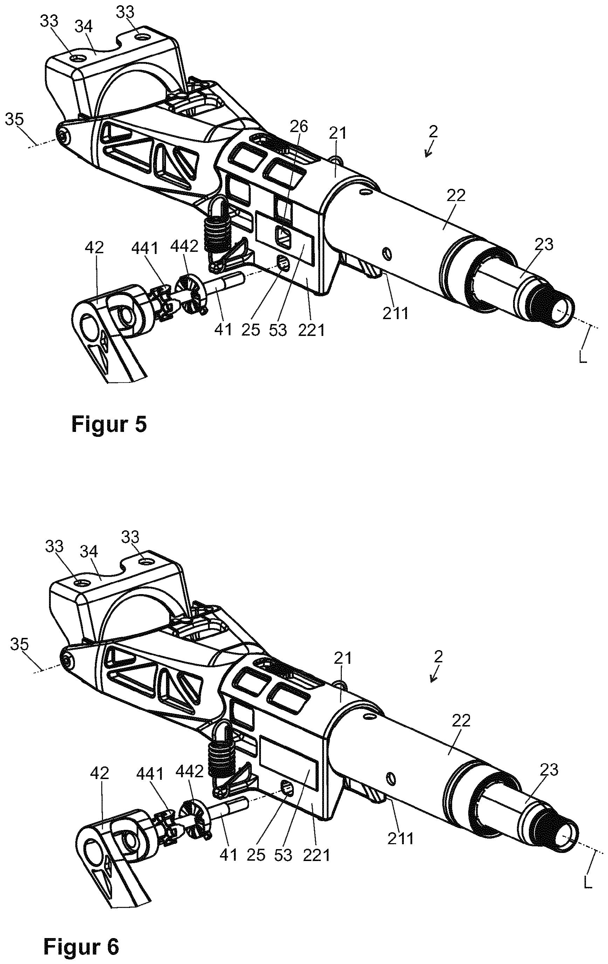

Figur 5 zeigt eine zweite mögliche Ausführung der dritten Auflagefläche 53 in derselben Ansicht wie in Figur 2, wobei die dritte Auflagefläche 53 nicht wie in Figur 2 geteilt, sondern leistenförmig in Längsrichtung durchgehend geformt ist, wobei die Einformung 26 in die Flächenerstreckung der dritten Auflagefläche 53 eingeformt ist.

Figur 6 zeigt eine dritte mögliche Ausführung der dritten Auflagefläche 53 in derselben Ansicht wie in Figur 3, wobei im Unterschied zu der in Figur 2 gezeigten Ausführung die gesamte Flächenerstreckung der dritte Auflagefläche 53 eben gefüllt ist, also keine Einformungen 26 wie in Figur 2 oder 3 vorhanden sind. Diese Ausführung ist gusstechnisch anspruchsvoller, kann jedoch gut als Blechformteil realisiert werden, wobei die durchgehend ausgeformte dritte Auflagefläche 53 eine Art Sicke zur Verstärkung bildet, welche die Formsteifigkeit der Manteleinheit 21 in vorteilhafter Weise erhöht.

In der ersten Ausführung der ersten Außenseite 211 gemäß Figur 3 ist die zweite Auflagefläche 52 in zwei in Längsrichtung beabstandete Teil-Auflageflächen 52a und 52b aufgeteilt, zwischen denen die Öffnung 25 für die Spannachse 41 befindet. Zum einen wird die Spannkraft F direkt im Bereich der zweiten Auflagefläche 52 eingeleitet, zum anderen ist diese Anordnung für eine gusstechnische Fertigung vorteilhaft. Die erste Auflagefläche 51 befindet sich in Höhenrichtung H bevorzugt wie dargestellt in derselben Höhenposition wie die Längsachse L.

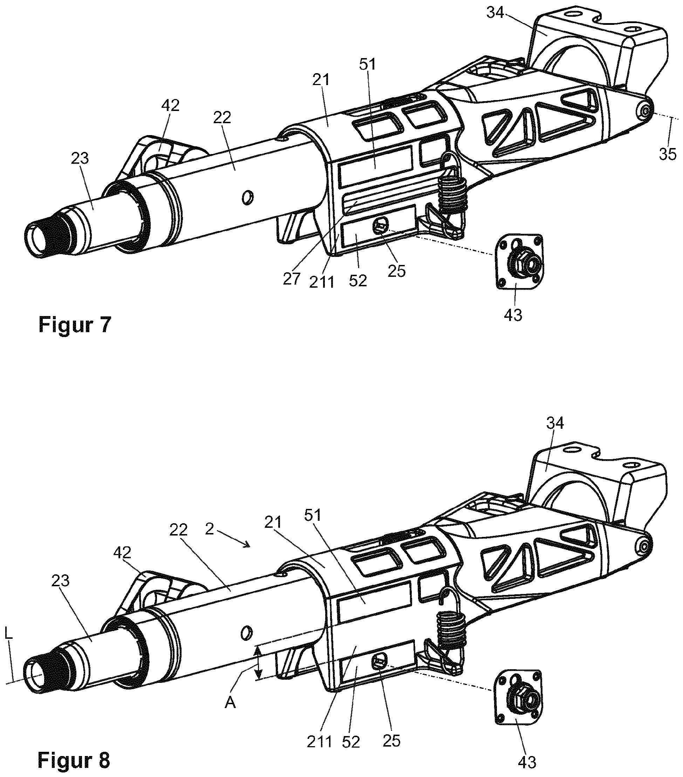

Figur 7 zeigt eine zweite mögliche Ausführung der zweiten Auflagefläche 52 in derselben Ansicht wie in Figur 3. Dabei ist zur Optimierung der Fertigung innerhalb des Abstands A zwischen der ersten Auflagefläche 51 und der zweiten Auflagefläche 52 in die erste Außenseite 211 eine längs durchgehende Vertiefung 27 eingebracht. Wenn die Manteleinheit 21 als Gussteil gefertigt ist, kann dadurch eine Materialanhäufung verringert werden, bei einem Blechformteil kann die Vertiefung 27 eine Verstärkungssicke bilden. Im Unterschied zu Figur 2 ist die zweite Auflagefläche 52 in Längsrichtung leistenförmig durchgehend ausgebildet, wobei die Öffnung 25 sich innerhalb der Flächenerstreckung der zweiten Auflagefläche 52 befindet. Dadurch kann die wirksame Kontaktfläche der Auflage gegenüber der Ausführung der Figuren 1 bis 4 vergrößert werden.

Figur 8 zeigt in derselben Ansicht wie Figur 3 eine dritte mögliche Ausführung, die im Prinzip der Ausführung der Figur 7 entspricht, wobei die Vertiefung 27 weggelassen ist.

Die in den Figuren 2, 4 und 5 gezeigten unterschiedlichen Ausführungen der ersten Außenseite 211 umfassend die ersten und zweiten Auflageflächen 51 und 52 können beliebig kombiniert werden mit den in den Figuren 3, 7 und 8 gezeigten unterschiedlichen Ausführungen der zweiten Außenseite 221 aufweisend die dritte Auflagefläche 53.

In den dargestellten Ausführungen ist die Abmessung der dritten Auflagefläche 53 in Höhenrichtung H größer als die einer der ersten oder zweiten Auflageflächen 51 oder 52, jedoch bevorzugt kleiner oder gleich der Summe der Abmessungen der ersten und der zweiten Auflagefläche 51 und 52 in dieser Höhenrichtung.

### Bezugszeichenliste

- 1: Lenksäule
- 2: Stelleinheit
- 21: Manteleinheit
- 210: Schlitz
- 211: erste Außenseite
- 221: zweite Außenseite
- 22: Mantelrohr
- 23: Lenkspindel
- 24: Befestigungsabschnitt
- 25: Öffnung
- 26: Einformung
- 27: Vertiefung
- 3: Trageinheit
- 31: erste Seitenwange
- 311: erste Innenseite
- 32: zweite Seitenwange
- 321: zweite Innenseite
- 33: Befestigungsmittel
- 34: Konsole
- 35: Schwenkachse
- 36: Langlöcher
- 4: Spanneinrichtung
- 41: Spannachse
- 42: Spannhebel
- 43: Widerlager
- 44: Spanngetriebe
- 441, 442: Nockenscheiben
- 51: erste Auflagefläche
- 52: zweite Auflagefläche
- 52a,b: Teil-Auflageflächen
- 53: Auflagefläche
- 53a,b: Teil-Auflageflächen
- A: Abstand
- L: Längsachse
- H: Höhenrichtung
- F: Spannkraft

## Patentansprüche

1. Lenksäule (1) für ein Kraftfahrzeug, umfassend eine Stelleinheit (2), die eine in einer Manteleinheit (21) um ihre Längsachse (L) drehbar gelagerte Lenkspindel (23) aufweist, eine mit der Karosserie des Kraftfahrzeugs verbindbare Trageinheit (3), die sich in Höhenrichtung (H) erstreckende erste und zweite Seitenwangen (31, 32) mit sich einander quer zur Längsachse (L) gegenüberliegenden ersten und zweiten Innenseiten (311, 321) aufweist, zwischen denen die Manteleinheit (21) angeordnet ist, und eine auf die Seitenwangen (31, 32) wirkende Spanneinrichtung (4), die in einer Fixierstellung die erste Innenseite (311) gegen eine erste Außenseite (211) der Manteleinheit (21) und die zweite Innenseite (321) gegen eine zweite Außenseite (221) der Manteleinheit (21) verspannt, und in einer Freigabestellung die Innenseiten (311, 321) von den Außenseiten (211, 221) löst und eine Verstellung der Stelleinheit (2) relativ zur Trageinheit (3) freigibt,
wobei zumindest auf der ersten Außenseite (211) erste und zweite erhabene Auflageflächen (51, 52) ausgebildet sind, welche die erste Innenseite (311) kontaktieren und einen Abstand (A) voneinander haben,
wobei die zweite Außenseite (221) eine dritte erhabene Auflagefläche (53) aufweist, welche die zweite Innenseite (321) kontaktiert, und die zumindest teilweise in dem Abstand (A) zwischen der ersten Auflagefläche (51) und der zweiten Auflagefläche (52) angeordnet ist,
**dadurch gekennzeichnet,**
**dass** die Anordnung der Auflageflächen (51, 52) auf der ersten Außenseite (211) asymmetrisch zur Anordnung der Auflageflächen (53) auf der zweiten Außenseite (221) ausgebildet ist.

2. Lenksäule nach Anspruch 1, **dadurch gekennzeichnet, dass** die erste Auflagefläche (51) und die zweite Auflagefläche (52) den Abstand (A) in Höhenrichtung (H) haben.

3. Lenksäule nach einem der vorangehenden Ansprüche, **dadurch gekennzeichnet, dass** die dritte Auflagefläche (53) im Wesentlichen mittig in dem Abstand (A) zwischen der ersten Auflagefläche (51) und der zweiten Auflagefläche (52) angeordnet ist.

4. Lenksäule nach einem der vorangehenden Ansprüche, **dadurch gekennzeichnet, dass** die dritte Auflagefläche (53) sich vollständig in dem Abstand (A) zwischen der ersten Auflagefläche (51) und der zweiten Auflagefläche (52) erstreckt.

5. Lenksäule nach einem der vorangehenden Ansprüche, **dadurch gekennzeichnet, dass** die dritte Auflagefläche (53) größer ausgebildet ist als die erste Auflagefläche (51) oder die zweite Auflagefläche (52), wobei bevorzugt die Summe der ersten und zweiten Auflagefläche (51, 52) im Wesentlichen der dritten Auflagefläche (53) entspricht.

6. Lenksäule nach einem der vorangehenden Ansprüche, **dadurch gekennzeichnet, dass** zumindest eine der Auflageflächen (51, 52, 53) auf Höhe der Längsachse (L) angeordnet ist.

7. Lenksäule nach einem der vorangehenden Ansprüche, **dadurch gekennzeichnet, dass** zumindest eine der Auflageflächen (51, 52, 53) in zumindest zwei voneinander beabstandete Teilauflageflächen (52a, 52b, 53a, 53b) unterteilt ist.

8. Lenksäule nach einem der vorangehenden Ansprüche, **dadurch gekennzeichnet, dass** die Spanneinrichtung (4) eine Spannachse (41) aufweist, der die Seitenwangen 31, 32) und die Außenseiten (211, 221) durchsetzt.

9. Lenksäule nach Anspruch 8, **dadurch gekennzeichnet, dass** die Spannachse (41) eine der Auflageflächen (51, 52, 53) durchsetzt.

10. Lenksäule nach einem der vorangehenden Ansprüche, **dadurch gekennzeichnet, dass** die Manteleinheit (21) ein Blechformteil oder ein Gussteil aufweist, an dem die erhabenen Auflageflächen (51, 52, 53) ausgebildet sind.

11. Lenksäule (1) für ein Kraftfahrzeug, umfassend eine Stelleinheit (2), die eine in einer Manteleinheit (21) um ihre Längsachse (L) drehbar gelagerte Lenkspindel (23) aufweist, eine mit der Karosserie des Kraftfahrzeugs verbindbare Trageinheit (3), die sich in Höhenrichtung (H) erstreckende erste und zweite Seitenwangen (31, 32) aufweist, zwischen denen die Manteleinheit (21) angeordnet ist, und eine auf die Seitenwangen (31, 32) wirkende Spanneinrichtung (4), die in einer Fixierstellung die Seitenwangen (31, 32) die Manteleinheit (21) verspannt, und in einer Freigabestellung die Seitenwangen (31, 32) von der Manteleinheit (21) löst und eine Verstellung der Stelleinheit (2) relativ zur Trageinheit (3) freigibt,
**dadurch gekennzeichnet,**
**dass** in einem Querschnitt, der orthogonal zur Längsachse (L) ausgerichtet ist, die Manteleinheit (21) und die Seitenwangen (31, 32) in genau drei Flächenabschnitten in Kontakt stehen.

## Claims

1. Steering column (1) for a motor vehicle, comprising an actuating unit (2) which has a steering spindle (23) which is mounted such that it can be rotated about its longitudinal axis (L) in a casing unit (21), further comprising a supporting unit (3) which can be connected to the body of the motor vehicle and has first and second side cheeks (31, 32) which extend in the vertical direction (H) with first and second inner sides (311, 321) which lie opposite one another transversely with respect to the longitudinal axis (L) and between which the casing unit (21) is arranged, and further comprising a clamping device (4) which acts on the side cheeks (31, 32), braces the first inner side (311) against a first outer side (211) of the casing unit (21) and the second inner side (321) against a second outer side (221) of the casing unit (21) in a fixing position, and releases the inner sides (311, 321) from the outer sides (211, 221) in a release position and enables an adjustment of the actuating unit (2) relative to the supporting unit (3), first and second raised bearing faces (51, 52) being configured at least on the first outer side (211), which bearing faces (51, 52) make contact with the first inner side (311) and are at a spacing (A) from one another, the second outer side (221) having a third raised bearing face (53) which makes contact with the second inner side (321) and is arranged at least partially in the spacing (A) between the first bearing face (51) and the second bearing face (52),
**characterized**
**in that** the arrangement of the bearing faces (51, 52) on the first outer side (211) is configured asymmetrically with respect to the arrangement of the bearing faces (53) on the second outer side (221).

2. Steering column according to Claim 1, **characterized in that** the first bearing face (51) and the second bearing face (52) are at the spacing (A) in the vertical direction (H) .

3. Steering column according to either of the preceding claims, **characterized in that** the third bearing face (53) is arranged substantially centrally in the spacing (A) between the first bearing face (51) and the second bearing face (52).

4. Steering column according to one of the preceding claims, **characterized in that** the third bearing face (53) extends completely in the spacing (A) between the first bearing face (51) and the second bearing face (52).

5. Steering column according to one of the preceding claims, **characterized in that** the third bearing face (53) is of greater configuration than the first bearing face (51) or the second bearing face (52), the sum of the first and second bearing faces (51, 52) preferably corresponding substantially to the third bearing face (53) .

6. Steering column according to one of the preceding claims, **characterized in that** at least one of the bearing faces (51, 52, 53) is arranged at the level of the longitudinal axis (L).

7. Steering column according to one of the preceding claims, **characterized in that** at least one of the bearing faces (51, 52, 53) is divided into two part bearing faces (52a, 52b, 53a, 53b) which are spaced apart from one another.

8. Steering column according to one of the preceding claims, **characterized in that** the clamping device (4) has a clamping shaft (41) which penetrates the side cheeks (31, 32) and the outer sides (211, 221).

9. Steering column according to Claim 8, **characterized in that** the clamping shaft (41) penetrates one of the bearing faces (51, 52, 53).

10. Steering column according to one of the preceding claims, **characterized in that** the casing unit (21) has a shaped sheet-metal part or a cast part, on which the raised bearing faces (51, 52, 53) are configured.

11. Steering column (1) for a motor vehicle, comprising an actuating unit (2) which has a steering spindle (23) which is mounted such that it can be rotated about its longitudinal axis (L) in a casing unit (21), further comprising a supporting unit (3) which can be connected to the body of the motor vehicle and has first and second side cheeks (31, 32) which extend in the vertical direction (H) and between which the casing unit (21) is arranged, and further comprising a clamping device (4) which acts on the side cheeks (31, 32), braces the side cheeks (31, 32) and the casing unit (21) in a fixing position, and releases the side cheeks (31, 32) from the casing unit (21) in a release position and enables an adjustment of the actuating unit (2) relative to the supporting unit (3),
**characterized**
**in that** the casing unit (21) and the side cheeks (31, 32) are in contact in precisely three area sections in a cross section which is oriented orthogonally with respect to the longitudinal axis (L).

## Revendications

1. Colonne de direction (1) pour un véhicule automobile, comprenant une unité de réglage (2), qui présente une broche de direction (23) logée dans une unité d'enveloppe (21) de manière à pouvoir tourner autour de son axe longitudinal (L), une unité de support (3) pouvant être reliée à la carrosserie du véhicule automobile, qui présente des première et deuxième joues latérales (31, 32) s'étendant dans la direction verticale (H) avec des premier et deuxième côtés intérieurs (311, 312) opposés l'un à l'autre transversalement à l'axe longitudinal (L), entre lesquels l'unité d'enveloppe (21) est agencée, et un appareil de serrage (4) agissant sur les joues latérales (31, 32) qui, dans une position de fixation, serre le premier côté intérieur (311) contre un premier côté extérieur (211) de l'unité d'enveloppe (21) et le deuxième côté intérieur (321) contre un deuxième côté extérieur (221) de l'unité d'enveloppe (21), et, dans une position de libération, détache les côtés intérieurs (311, 321) des côtés extérieurs (211, 221) et libère un déplacement de l'unité de réglage (2) par rapport à l'unité de support (3),
des première et deuxième surfaces d'appui en relief (51, 52) étant formées au moins sur le premier côté extérieur (211), qui sont en contact avec le premier côté intérieur (311) et qui ont une distance (A) l'une de l'autre,
le deuxième côté extérieur (221) présentant une troisième surface d'appui en relief (53), qui est en contact avec le deuxième côté intérieur (321), et qui est agencée au moins partiellement à la distance (A) entre la première surface d'appui (51) et la deuxième surface d'appui (52),
**caractérisée en ce que**
l'agencement des surfaces d'appui (51, 52) sur le premier côté extérieur (211) est configuré sous forme asymétrique par rapport à l'agencement des surfaces d'appui (53) sur le deuxième côté extérieur (221).

2. Colonne de direction selon la revendication 1, **caractérisée en ce que** la première surface d'appui (51) et la deuxième surface d'appui (52) ont la distance (A) dans la direction verticale (H).

3. Colonne de direction selon l'une quelconque des revendications précédentes, **caractérisée en ce que** la troisième surface d'appui (53) est agencée essentiellement au centre de la distance (A) entre la première surface d'appui (51) et la deuxième surface d'appui (52).

4. Colonne de direction selon l'une quelconque des revendications précédentes, **caractérisée en ce que** la troisième surface d'appui (53) s'étend entièrement à la distance (A) entre la première surface d'appui (51) et la deuxième surface d'appui (52).

5. Colonne de direction selon l'une quelconque des revendications précédentes, **caractérisée en ce que** la troisième surface d'appui (53) est configurée pour être plus grande que la première surface d'appui (51) ou la deuxième surface d'appui (52), la somme de la première et de la deuxième surface d'appui (51, 52) correspondant de préférence essentiellement à la troisième surface d'appui (53).

6. Colonne de direction selon l'une quelconque des revendications précédentes, **caractérisée en ce qu'**au moins l'une des surfaces d'appui (51, 52, 53) est agencée à hauteur de l'axe longitudinal (L).

7. Colonne de direction selon l'une quelconque des revendications précédentes, **caractérisée en ce qu'**au moins l'une des surfaces d'appui (51, 52, 53) est divisée en au moins deux surfaces d'appui partielles (52a, 52b, 53a, 53b) espacées l'une de l'autre.

8. Colonne de direction selon l'une quelconque des revendications précédentes, **caractérisée en ce que** l'appareil de serrage (4) présente un axe de serrage (41), qui traverse les joues latérales (31, 32) et les côtés extérieurs (211, 221).

9. Colonne de direction selon la revendication 8, **caractérisée en ce que** l'axe de serrage (41) traverse l'une des surfaces d'appui (51, 52, 53).

10. Colonne de direction selon l'une quelconque des revendications précédentes, **caractérisé en ce que** l'unité d'enveloppe (21) présente une pièce façonnée en tôle ou une pièce moulée, sur laquelle sont formées les surfaces d'appui en relief (51, 52, 53).

11. Colonne de direction (1) pour un véhicule automobile, comprenant une unité de réglage (2), qui présente une broche de direction (23) logée dans une unité d'enveloppe (21) de manière à pouvoir tourner autour de son axe longitudinal (L), une unité de support (3) pouvant être reliée à la carrosserie du véhicule automobile, qui présente des première et deuxième joues latérales (31, 32) s'étendant dans la direction verticale (H), entre lesquelles l'unité d'enveloppe (21) est agencée, et un appareil de serrage (4) agissant sur les joues latérales (31, 32), qui, dans une position de fixation, serre les joues latérales (31, 32) contre l'unité d'enveloppe (21), et qui, dans une position de libération, détache les joues latérales (31, 32) de l'unité d'enveloppe (21) et libère un déplacement de l'unité de réglage (2) par rapport à l'unité de support (3),
**caractérisé en ce que**
dans une section transversale qui est orientée orthogonalement à l'axe longitudinal (L), l'unité d'enveloppe (21) et les joues latérales (31, 32) sont en contact dans exactement trois sections de surface.
